# FASCICULE DE BREVET EUROPEEN

(11) **EP 3 929 951 B1**
(45) Date de publication et mention de la délivrance du brevet: **08.10.2025**
(21) Numéro de dépôt: 21177559.8
(22) Date de dépôt: 03.06.2021
(51) Int. Cl.: H01F 41/02, H02K 15/03, H02K 21/24, H02K 1/27, H02K 1/30, H02K 7/00, H01F 7/02

(54) **PROCÉDÉ ET SYSTÈME DE FABRICATION DE PÔLES D AIMANTS**
VERFAHREN UND SYSTEM ZUR HERSTELLUNG VON MAGNETPOLEN
METHOD AND SYSTEM FOR MANUFACTURING MAGNETIC POLES

(30) Priorité: 25.06.2020 FR 2006644
(43) Date de publication de la demande: 29.12.2021
(73) Titulaire: Ampere SAS, 92100 Boulogne-Billancourt (FR)
(72) Inventeur: KOLEHMAINEN, Jere, 76410 Saint-Aubin-lès-Elbeuf (FR)
(74) Mandataire: Renault Group

(56) Documents cités:
- EP-A1- 2 448 093
- WO-A1-2018/172636
- FR-A1- 2 996 378
- FR-A1- 3 083 023
- US-B2- 10 651 697

## Description

La présente invention se rapporte de manière générale aux domaines de la mécanique et de l'électrotechnique, et concerne plus précisément un procédé de fabrication de pôles d'aimants de rotor pour machine électrique à flux axial.

Les machines électriques à flux axial à aimants à pôles lisses présentent un intérêt dans la traction d'automobiles électriques et hybrides, de par leur capacité intrinsèque à fournir un couple moteur important, tout en présentant un faible encombrement. Cependant, dans une configuration d'implantation de ce type de machine dans un véhicule hybride par exemple, le rotor et le stator d'une telle machine sont confinés dans un carter, ce qui rend le rotor difficilement refroidissable. Il est donc nécessaire de réduire au maximum l'échauffement du rotor, notamment lorsque celui-ci est constitué d'aimants, qui risquent de se démagnétiser lorsque la température devient trop élevée. Cet échauffement du rotor est dû notamment aux courants de Foucault autour des aimants générés par la rotation de la machine et le découpage du courant nécessaire au pilotage de la machine.

La demande de brevet FR2996378 A1 présente notamment sur sa figure 14 des pôles d'aimants segmentés dans lesquels chaque pôle d'aimants est fait de petits aimants collés les uns aux autres, ce qui permet de réduire les courants de Foucault et donc l'échauffement. Bien que simples à réaliser ces pôles d'aimants sont irréguliers donc non optimaux du point de vue magnétique, et leur assemblage nécessite a priori des machines coûteuses.

Un des buts de l'invention est de remédier à au moins une partie des inconvénients de la technique antérieure en fournissant un procédé et un système de fabrication de pôles d'aimants pour une machine électrique à flux axial, qui soit simples à mettre en œuvre et peu coûteux.

A cette fin, l'invention est exposée dans la revendication 1.

Grâce à l'invention, on peut utiliser des aimants unitaires peu coûteux par exemple issus du commerce et former deux pôles d'aimants trapézoïdaux par un seul trait de coupe. Ainsi les pôles d'aimants obtenus optimisent les qualités magnétiques de la machine à peu de frais.

Selon une caractéristique avantageuse du procédé selon l'invention, ladite étape de formation de rangées d'aimants unitaires est réalisée parallèlement à l'étape de collage des rangées d'aimants unitaires les unes aux autres, ledit collage desdits aimants unitaires pour former une rangée étant effectué sur une rangée d'aimants unitaires précédemment formée et enduite de colle. Cette réalisation en parallèle permet de gagner du temps ainsi que des dispositifs de support avant collage des rangées entre elles.

Selon encore une autre caractéristique avantageuse du procédé selon l'invention, ladite séparation de ladite structure d'aimants unitaires en deux pôles trapézoïdaux identiques est effectuée selon une ligne qui relie ledit plan comportant les arêtes longitudinales des premiers aimants unitaires de chacune desdites rangées au plan comportant les arêtes longitudinales des derniers aimants unitaires de chacune desdites rangées. Cela permet d'obtenir des pôles présentant une symétrie axiale plus aboutie que si la ligne de coupe reliait la première rangée collée à la dernière rangée collée, et donc une machine avec de meilleures performances magnétiques.

Selon encore une autre caractéristique avantageuse du procédé selon l'invention, ladite étape de séparation est suivie d'une étape de surmoulage desdits pôles trapézoïdaux par de la résine, apte à donner une forme en arc de cercle à l'extrémité radiale externe desdits pôles après surmoulage. Les pôles ainsi surmoulés sont aptes à être insérés dans un corps de rotor et à recevoir une frette sur ladite extrémité radiale externe, ce qui permet de renforcer mécaniquement la tenue des aimants dans le rotor.

Selon encore une autre caractéristique avantageuse du procédé selon l'invention, l'étape de formation de rangées d'aimants unitaires par collage est précédée d'une étape de sectionnement d'un bloc d'aimant apte à fournir lesdits aimants unitaires. Ainsi on diminue encore les coûts de fabrication, de plus la taille des aimants unitaires peut être adaptée plus finement au rotor à fabriquer.

Préférentiellement, ladite étape de sectionnement d'un bloc d'aimant est précédée d'une étape de rainurage dudit bloc d'aimant apte à favoriser ladite étape de sectionnement dudit bloc d'aimant. Cela permet d'utiliser un outil basique pour le sectionnement tel qu'un actionneur poussoir.

L'invention concerne aussi un système de fabrication de pôles d'aimants mettant en œuvre le procédé selon l'invention, ledit système comportant :
- un réceptacle comportant une paroi de fond amovible inclinée vers le bas, apte à recevoir des aimants unitaires provenant d'une surface de déversement, ledit réceptacle comportant une surface support dont l'inclinaison par rapport à ladite paroi de fond reproduit un angle entre deux côtés adjacents dudit parallélogramme, ladite paroi de fond étant apte à laisser glisser lesdits aimants unitaires reçus jusqu'à ladite surface support,
- des moyens d'injection de colle placés au-dessus dudit réceptacle et aptes à envoyer de la colle entre lesdits aimants au fur et à mesure qu'ils glissent sur ladite paroi de fond et forment ladite rangée d'aimants unitaires,
- des moyens élastiques reliant ladite paroi de fond amovible et ladite surface support, apte à laisser descendre ladite paroi de fond amovible jusqu'à ce que l'épaisseur de ladite rangée d'aimants unitaires ainsi formée passe en retrait de ladite surface de déversement,
- ladite surface de déversement, apte à fournir ledit réceptacle en aimants unitaires d'abord sur la paroi de fond amovible puis sur ladite rangée d'aimants unitaires passée en retrait et sur les rangées d'aimants unitaires suivantes ainsi formées par ledit procédé, la colle envoyée par lesdits moyens d'injection de colle étant apte à glisser sous une rangée d'aimants unitaires en formation et à coller ainsi ladite rangée d'aimants unitaires en formation à la rangée d'aimants unitaires sous-jacente.

Avantageusement, ladite surface de déversement du système selon l'invention est inclinée vers le bas et le système selon l'invention comporte en outre :
- un moyen d'entraînement horizontal en amont de ladite surface de déversement, ledit moyen d'entraînement horizontal étant apte à entraîner un bloc d'aimant vers ladite surface de déversement, ledit bloc d'aimant ayant la forme d'une plaque longitudinale apte à être coupée transversalement en une série d'aimants unitaires,
- un moyen de blocage dudit bloc d'aimant sur ledit moyen d'entraînement horizontal lorsque ledit bloc d'aimant déborde sur ladite surface de déversement d'un volume correspondant à un aimant unitaire,
- un moyen de sectionnement dudit bloc d'aimant bloqué par ledit moyen de blocage en un aimant unitaire d'une part, et ce qui reste dudit bloc d'aimant d'autre part.

Avantageusement encore, le système selon l'invention comporte en outre un moyen de rainurage dudit bloc d'aimant apte à marquer les emplacements de sectionnement dudit bloc d'aimant en aimants unitaires, ledit moyen de rainurage étant placé en amont dudit moyen de blocage. Le rainurage du bloc d'aimant facilite son sectionnement ultérieur.

Avantageusement encore, le système selon l'invention comporte un moyen de transfert des rangées d'aimants unitaires collées entre elles lorsqu'elles forment ladite structure d'aimants unitaires, depuis ledit réceptacle vers un support de coupe, un moyen de maintien de ladite structure d'aimants unitaires transférée par ledit moyen de transfert sur ledit support de coupe, et un moyen de séparation de ladite structure d'aimants unitaires en deux pôles trapézoïdaux identiques formant chacun un pôle d'aimants.

Préférentiellement, ledit moyen de séparation de ladite structure d'aimants unitaires en deux pôles trapézoïdaux identiques utilise un jet d'eau à haute pression.

Le système selon l'invention présente des avantages analogues à ceux du procédé selon l'invention.

D'autres caractéristiques et avantages apparaîtront à la lecture d'un mode de réalisation préféré décrit en référence aux figures dans lesquelles :
- la figure 1 représente des étapes du procédé selon l'invention, dans ce mode de réalisation préféré,
- la figure 2 représente des premières étapes du procédé selon l'invention, dans ce mode de réalisation préféré,
- la figure 3 représente une étape de séparation du procédé selon l'invention, suivant plusieurs variantes de réalisation de l'invention,
- la figure 4 représente des pôles d'aimants surmoulés en utilisant le procédé selon l'invention suivant plusieurs variantes de réalisation de l'invention,
- la figure 5 représente un exemple de réalisation d'un rotor fabriqué par le procédé selon l'invention,
- la figure 6 représente un système de fabrication selon l'invention, dans ce mode de réalisation préféré,
- la figure 7 représente un système de fabrication ne faisant pas partie de l'invention, lors d'une étape de formation d'une rangée d'aimants,
- et la figure 8 représente le système de fabrication de la figure 7, lors d'une étape de collage de rangées d'aimants.

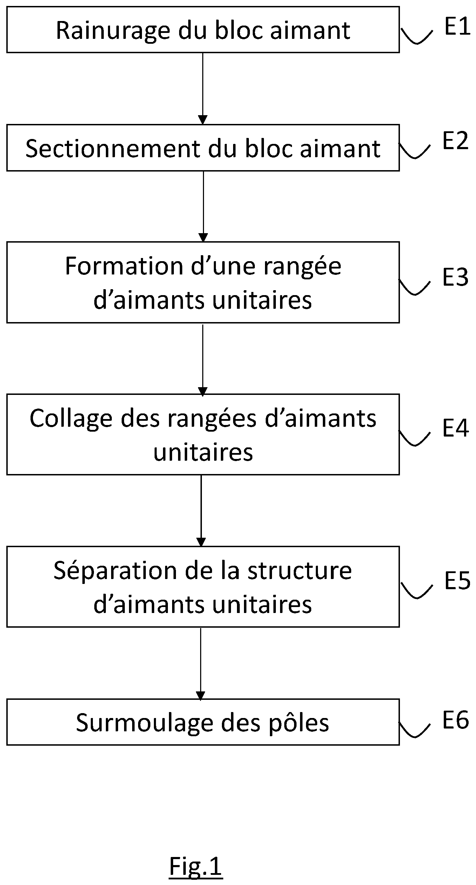

Selon un mode préféré de réalisation de l'invention représenté à la **figure 1****,** le procédé de fabrication de pôles d'aimants selon l'invention comporte des étapes E1 à E6.

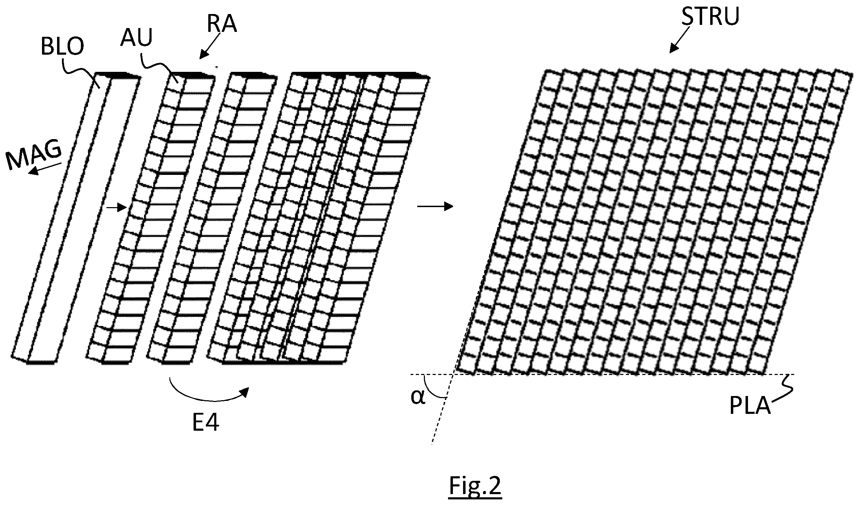

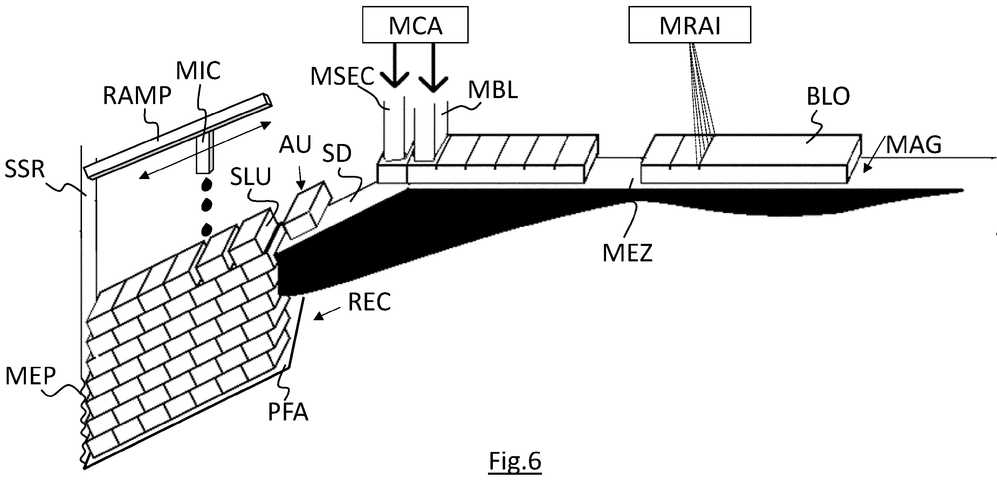

L'étape E1 est le rainurage d'un bloc d'aimant BLO représenté sur la **figure 2** et sur les **figures 6 à 8****.** Cette étape est par exemple mise en œuvre par le moyen de rainurage MRAI. Ce rainurage permet de faciliter le sectionnement, au niveau des rainures ainsi formées, du bloc d'aimant BLO en plusieurs aimants unitaires AU selon une étape de sectionnement E2 mise en œuvre par exemple par des actionneurs MSEC et MBL, comme décrit plus en détail ci-après en relation avec la **figure 6****.** Les aimants unitaires AU sont longitudinaux et leur direction de magnétisation MAG est orientée dans le sens de leur longueur.

L'étape suivante E3 est la formation d'une rangée RA d'aimants unitaires AU par le collage des aimants unitaires AU entre eux selon une même surface longitudinale. Ce collage est effectué sur une surface longitudinale SLU de chaque aimant unitaire AU à coller. Dans l'exemple de réalisation décrit sur la **figure 2****,** les aimants unitaires AU sont parallélépipédiques avec une face carrée, les surfaces longitudinales de chaque aimant unitaire AU sont donc identiques. Dans le cas où les surfaces longitudinales de chaque aimant unitaire AU ne sont pas toutes identiques, le collage dans cette étape E3 se fait sur chaque aimant unitaire AU selon une surface longitudinale identique, par exemple la plus petite, afin de réaliser une rangée RA homogène d'aimants unitaires. Les aimants unitaires AU sont en variante de forme non parallélépipédique mais présentant une surface longitudinale apte à permettre le collage des aimants unitaires entre eux. Cette étape E3 est répétée sur plusieurs rangées RA d'aimants unitaires.

L'étape suivante E4 est le collage des rangées RA d'aimants unitaires AU formées à l'étape précédente, selon une structure STRU d'aimants unitaires ayant la forme d'un parallélogramme. Pour cela les rangées RA d'aimants unitaires AU sont inclinées selon leur longueur d'un angle α par rapport au plan PLA contenant les arêtes longitudinales extérieures des premiers aimants de chaque rangée RA d'aimants unitaires. Cet angle α est compris strictement entre 0 et 90°, sa valeur dépend de la forme trapézoïdale plus ou moins prononcée voulue pour les pôles d'aimants fabriqués selon le procédé de l'invention. Par « arêtes longitudinales extérieures » on entend les arêtes longitudinales les plus externes au pôle d'aimant en cours de fabrication, pouvant servir de points d'appui du pôle d'aimant sur un support plan notamment. La structure en formation est donc en forme de parallélogramme non rectangulaire, si on considère une section plane de cette structure passant par un plan orthogonal aux arêtes longitudinales des aimants unitaires.

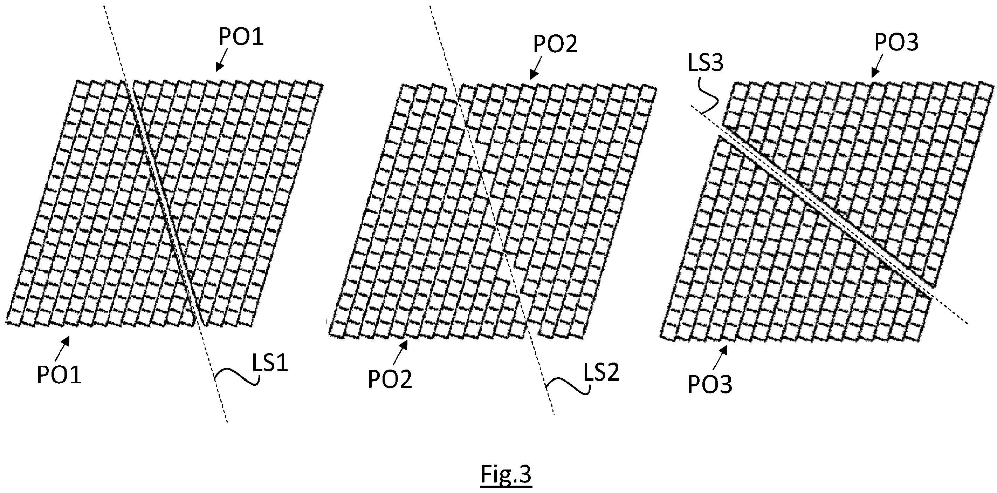

L'étape suivante E5 est la séparation de la structure STRU d'aimants unitaires obtenue à l'étape E4, en deux pôles trapézoïdaux. En référence à la **figure 3****,** cette séparation se fait par exemple par sciage des aimants selon une ligne de sectionnement LS1 ou respectivement LS3, pour obtenir deux pôles d'aimants identiques respectivement PO1 ou PO3. Le fait de scier la structure STRU selon la ligne LS1, reliant les deux côtés irréguliers de la structure STRU, donne deux pôles PO1 trapézoïdaux présentant chacun une bonne symétrie axiale. Le fait de scier la structure STRU selon la ligne LS3, reliant les deux côtés lisses de la structure STRU, donne deux pôles PO3 trapézoïdaux présentant chacun trois côtés lisses et un côté irrégulier qui peut présenter un intérêt pour la tenue des pôles d'aimants PO3 dans une structure composite. Une variante de réalisation consiste à séparer la structure STRU d'aimants unitaires en défaisant la colle le long d'une ligne de sectionnement LS2. On obtient alors deux pôles trapézoïdaux PO2 plus irréguliers que les pôles PO1 et PO3, mais cette variante a l'avantage de ne pas nécessiter de moyen de coupe coûteux.

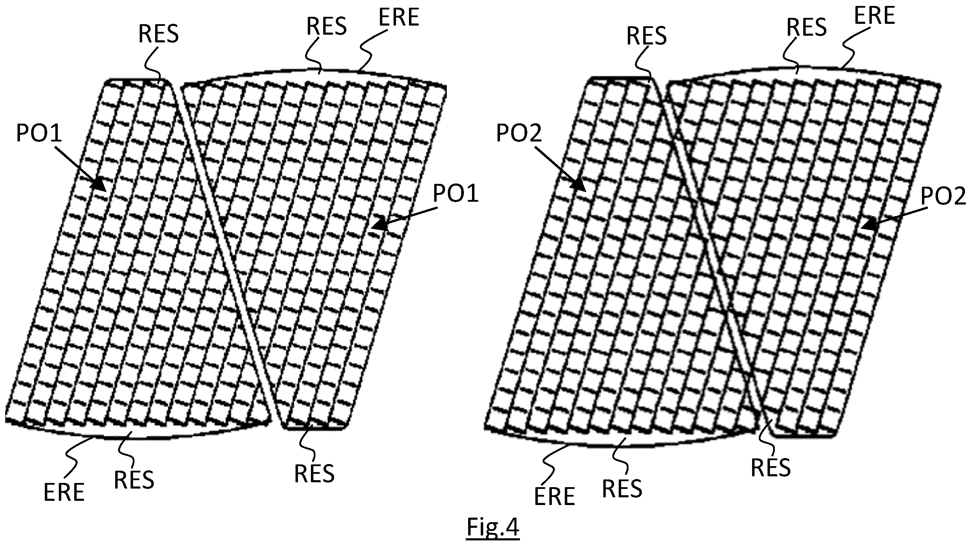

Enfin l'étape E6 est le surmoulage des pôles d'aimants obtenus à l'étape E5 avec de la résine RES. Cette étape utilise un moule présentant la forme finale des pôles d'aimants surmoulés, cette forme présentant sur la base de la forme trapézoïdale des pôles d'aimants PO1, PO2 ou PO3, un arrondi d'arc de cercle comme représenté sur la **figure 4****.** Cette courbure est la même que celle du rotor à fabriquer, de sorte qu'une fois les pôles surmoulés montés dans un corps de rotor par exemple en forme d'étoile, ils pourront être maintenus sur le corps de rotor par une frette au niveau de leurs extrémités radiales externes ERE, comme dans les documents FR2996378 ou FR3014255. En variante il est également envisageable de scier les extrémités des pôles d'aimants selon le rayon de courbure du rotor et de ne pas surmouler les pôles d'aimants.

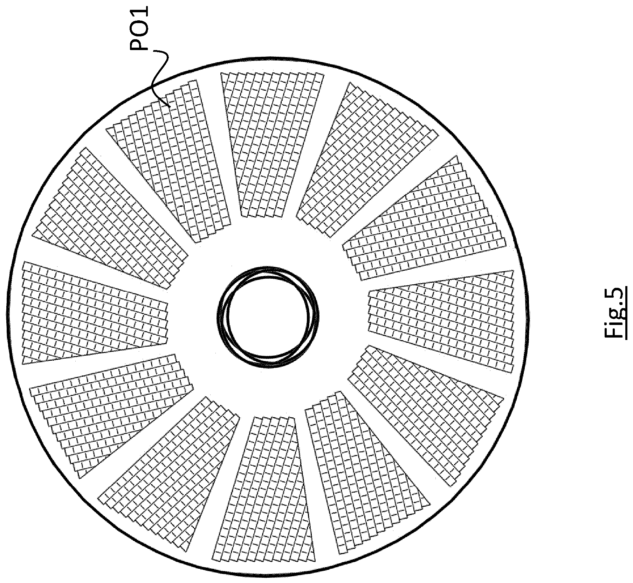

La **figure 5** présente un exemple de rotor réalisé selon l'invention, dans lequel la disposition des pôles d'aimants n'est pas symétrique. En effet dans cet exemple, chaque pôle d'aimants est disposé de sorte que l'axe de symétrie de du pôle d'aimants ne passe pas par le centre du rotor. Cet axe de symétrie dévie légèrement par rapport au rayon du rotor qui passe par le milieu de la base de la forme trapézoïdale du pôle d'aimants. Une telle réalisation permet de lisser les ondulations de couple de la machine tournante utilisant ce rotor.

En référence à la **figure 6****,** on décrit maintenant un système de fabrication de pôles d'aimants selon l'invention. Le bloc d'aimant BLO initial parallélépipédique arrive sur un moyen d'entraînement horizontal MEZ, par exemple un tapis roulant. Il a la forme d'une plaque disposée longitudinalement sur ce tapis roulant, sa direction de magnétisation MAG étant transversale à sa longueur, la largeur de la plaque correspondant à la longueur d'un aimant unitaire AU. On rappelle ici que le bloc d'aimants MAG n'est pas encore magnétisé à ce stade de fabrication du pôle d'aimants. Il a été formé par compression d'une poudre magnétique compressée et chauffée sous un champ magnétique dans la direction MAG qui oriente les grains magnétiques dans cette direction favorable à une magnétisation future des aimants unitaires selon cette direction MAG. Cette magnétisation a lieu avant ou après montage du rotor et n'a pas lieu d'être décrite plus en détail dans ce mode de réalisation préféré.

Le moyen d'entraînement MEZ entraîne le bloc d'aimant BLO selon une direction amont vers aval, qui l'amène vers différents moyens correspondant à différentes étapes successives ou simultanées de fabrication. Le premier moyen rencontré est un moyen de rainurage MRAI qui utilise par exemple un faisceau laser pour rainurer le bloc d'aimant BLO aux futurs emplacements de sectionnement du bloc d'aimants BLO. En variante le moyen de rainurage est une scie circulaire. Le moyen de rainurage MRAI utilise pour localiser ces emplacements différents capteurs pouvant être des moyens de traitement d'image.

Le bloc d'aimants BLO est ensuite entraîné par le moyen d'entraînement MEZ vers une surface de déversement SD, inclinée vers le bas dans le sens amont vers aval. Le bloc d'aimants BLO est bloqué sur le moyen d'entraînement MEZ dès que le bloc d'aimant BLO dépasse sur la surface de déversement SD d'un volume égal ou légèrement supérieur à celui d'un aimant unitaire AU. Ce blocage est effectué par un moyen de blocage MBL, par exemple un actionneur poussoir dont la force est calibrée pour ne pas endommager le bloc d'aimant BLO. Un moyen de sectionnement MSEC, par exemple également un actionneur poussoir, vient pousser sur le volume du bloc d'aimant BLO qui dépasse du moyen d'entraînement MEZ sur la surface de déversement SD, et sectionne ainsi le bloc d'aimant BLO en un aimant unitaire AU et le reste du bloc d'aimant BLO qui est sectionné au fur et à mesure de son avancement sur le moyen d'entraînement MEZ de façon similaire. Des moyens de commande MCA actionnent les moyens de blocage BLO et de sectionnement MSEC en utilisant en entrée des signaux issus de capteurs aptes à localiser les emplacements de sectionnement, par exemple des capteurs optiques.

Dès qu'un aimant unitaire AU est produit par le moyen de sectionnement MSEC, il tombe sur la surface de déversement SD qui est une rampe sur laquelle glisse l'aimant unitaire AU, ou bien un tapis d'entraînement. La surface de déversement SD déverse l'aimant unitaire AU dans un réceptacle REC comportant une paroi de fond amovible PFA elle-même inclinée vers le bas dans le sens amont vers aval, de sorte qu'un aimant déversé par la surface de déversement SD sur la paroi de fond amovible PFA glisse vers une surface support SSR qui correspond à la paroi latérale la plus avale du réceptacle REC. Cette surface support SSR est de préférence verticale et forme avec la paroi de fond amovible PFA le même angle α que celui de la structure d'aimants de la **figure 2****.** La longueur de la paroi de fond amovible PFA dans le sens amont-aval correspond également à la longueur d'une rangée d'aimants de la **figure 2****.** Ainsi les aimants unitaires AU déversés au fur et à mesure dans le réceptacle REC par la surface de déversement SD forment une rangée RA d'aimants unitaires en étant collés entre eux au fur et à mesure de leur arrivée grâce à des moyens MIC d'injection de colle. Les moyens MIC d'injection de colle sont mobiles le long d'une rampe RAMP qui leur permet d'envoyer des gouttes de colle entre d'une part chaque aimant unitaire AU déjà positionné sur sa rangée RA en formation et d'autre part l'aimant unitaire suivant arrivant depuis la surface de déversement SD. Les moyens de commande des moyens MIC d'injection de colle sont reliés à des capteurs de position des aimants unitaires AU, par exemple des moyens optiques.

Lorsqu'une rangée RA d'aimants unitaires AU est formée sur la paroi de fond amovible PFA, celle-ci s'est enfoncée d'au moins l'épaisseur de la rangée RA d'aimants AU vers le sol, de sorte que les prochains aimants unitaires déversés par la surface de déversement SD glisseront sur cette rangée qui vient d'être formée et formeront une nouvelle rangée au-dessus de celle-ci. L'enfoncement progressif de la paroi de fond PFA utilise de préférence des moyens élastiques MEP tels que des ressorts.

Il est à noter que dans le mode de réalisation de la **figure 6****,** la colle utilisée pour fixer les aimants et envoyée par les moyens MIC d'injection de colle est assez liquide pour couler sous la rangée d'aimants unitaires en formation et pour coller celle-ci à la rangée d'aimants unitaires sous-jacente. Dans ce mode de réalisation de l'invention les étapes E3 et E4 se font donc en même temps. Ce mode de réalisation est éventuellement complété par des moyens de compression de la structure d'aimants unitaires une fois sa forme finale en parallélogramme obtenue, et par des moyens de séchage, en fonction de la rapidité de prise de la colle utilisée. Un moyen de transfert est également prévu pour transférer la structure d'aimants unitaires obtenue vers un support de coupe. Un moyen de séparation tel qu'une scie à eau est ensuite utilisé pour couper cette structure en deux pôles trapézoïdaux, au-dessus de ce support de coupe.

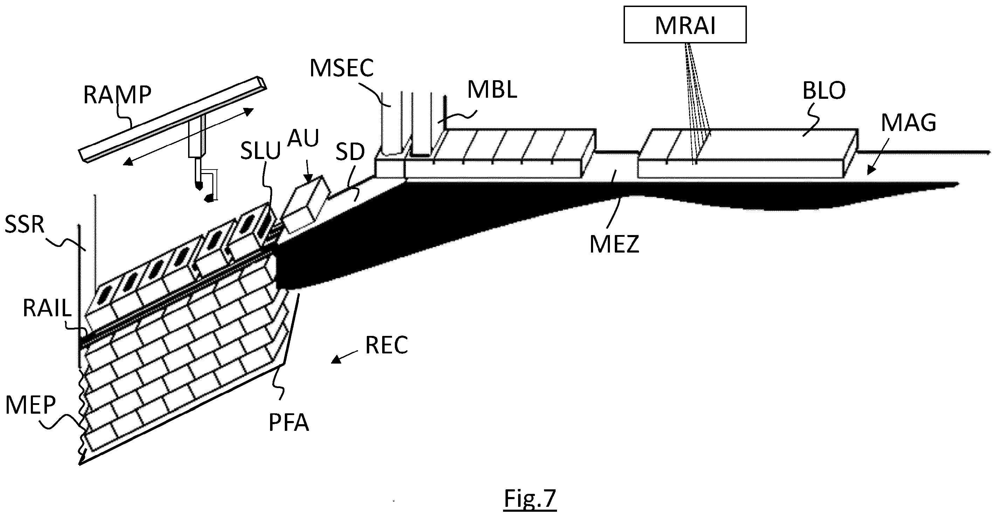

Une variante de réalisation, ne faisant pas partie de l'invention représentée **figures 6** **et** **7** est prévue lorsque la colle utilisée est trop visqueuse pour permettre le collage des rangées d'aimants unitaires entre elles avec le système de fabrication selon l'invention décrit en référence à la **figure 6****.**

Dans cette variante de réalisation, des rails amovibles RAIL sont disposés dans la continuité de la surface de déversement SD pour recueillir les aimants unitaires AU arrivant progressivement de cette surface. Les aimants unitaires AU glissent sur ces rails RAIL qui sont inclinés dans le sens de la pente de déversement. Chaque aimant unitaire est enduit de colle au fur et à mesure de son arrivée sur les rails RAIL par des pinceaux mobiles appliquant de la colle d'une part la surface supérieure de l'aimant unitaire et d'autre part sur une surface longitudinale de l'aimant unitaire. Les moyens de commande des pinceaux sont reliés à des capteurs de position des aimants unitaires AU, par exemple des moyens optiques.

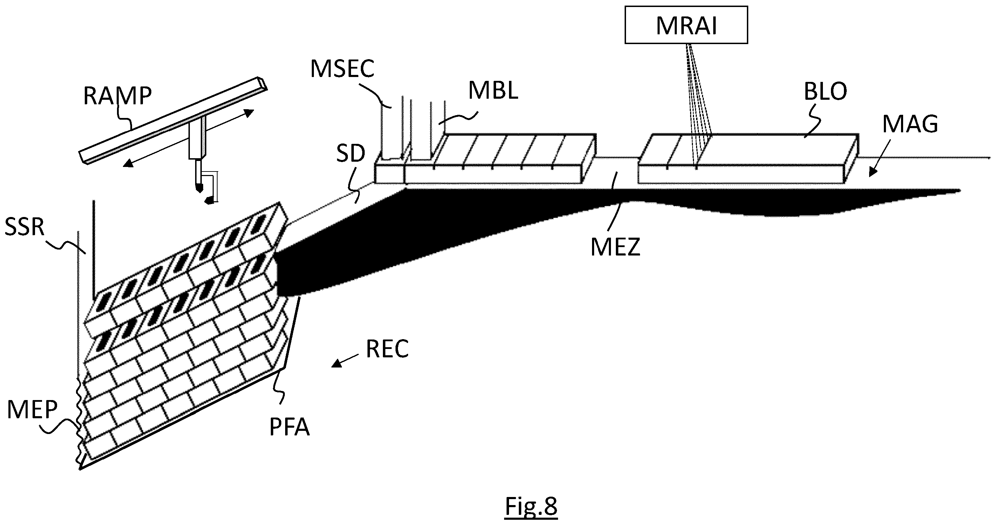

Lorsqu'une rangée RA d'aimants unitaires AU est formée sur les rails RAIL, ceux-ci sont retirés comme visible sur la **figure 8****.** Ainsi la rangée RA d'aimants unitaires venant d'être formée tombe sur la rangée d'aimants unitaires précédemment formée et se colle à celle-ci grâce à la colle appliquée sur les surfaces supérieures des aimants unitaires de la rangée précédente.

Il est à noter que de nombreuses variantes de réalisation de l'invention sont possibles. Notamment un ordre différent pour certaines étapes du procédé selon l'invention est envisageable. L'étape de surmoulage est par exemple réalisée avant l'étape de séparation. Dans ce cas le moule pour le surmoulage a la forme de deux pôles d'aimants disposés tête-bêche l'un contre l'autre. En variante le moyen de sectionnement utilisé est une scie à eau, dans une autre variante le moyen de séparation des aimants est une scie circulaire. Enfin une autre variante présente une étape supplémentaire de lissage des côtés irréguliers des pôles d'aimants par des étapes de découpe supplémentaires. Cependant cette dernière variante a pour désavantage de présenter une perte de matière lors de la fabrication des pôles d'aimants, ce qui n'est pas le cas avec la variante principale de réalisation de l'invention.

## Revendications

1. Procédé de fabrication de pôles d'aimants (PO1, PO2, PO3) pour une machine électrique à flux axial, lesdits pôles d'aimants (PO1, PO2, PO3) étant formés d'aimants unitaires (AU) identiques et oblongs, orientés magnétiquement longitudinalement, ledit procédé comportant une étape de formation (E3) de rangées (RA) d'aimants unitaires (AU) par collage desdits aimants unitaires (AU) entre eux selon une de leurs surfaces longitudinales (SLU) de même section, ledit procédé étant **caractérisé en ce qu'**il comporte en outre les étapes de :
- collage (E4) desdites rangées (RA) d'aimants unitaires (AU) les unes aux autres, tout en maintenant lesdites rangées (RA) d'aimants unitaires (AU) inclinées par rapport à un plan (PLA) comportant les arêtes longitudinales les plus externes des premiers aimants unitaires (AU) de chacune desdites rangées (RA), jusqu'à former une structure (STRU) d'aimants unitaires (AU) en forme de parallélogramme non rectangulaire, en considérant une section plane de la structure, ladite section étant orthogonale au plan comportant lesdites arêtes longitudinales,
- séparation (E5) de ladite structure (STRU) d'aimants unitaires (AU) en deux pôles (PO1, PO2, PO3) trapézoïdaux identiques.

2. Procédé de fabrication selon la revendication 1, **caractérisé en ce que** ladite étape (E3) de formation de rangées (RA) d'aimants unitaires (AU) est réalisée parallèlement à l'étape (E4) de collage des rangées (RA) d'aimants unitaires (AU) les unes aux autres, ledit collage desdits aimants unitaires (AU) pour former une rangée (RA) étant effectué sur une rangée (RA) d'aimants unitaires (AU) précédemment formée et enduite de colle.

3. Procédé de fabrication selon l'une quelconque des revendications précédentes, **caractérisé en ce que** ladite séparation (E5) de ladite structure (STRU) d'aimants unitaires (AU) en deux pôles trapézoïdaux (PO1, PO2) identiques est effectuée selon une ligne (LS1,LS2) qui relie ledit plan (PLA) comportant les arêtes longitudinales des premiers aimants unitaires (AU) de chacune desdites rangées (RA) au plan comportant les arêtes longitudinales des derniers aimants unitaires (AU) de chacune desdites rangées (RA).

4. Procédé de fabrication selon l'une quelconque des revendications précédentes, **caractérisé en ce que** ladite étape (E5) de séparation est suivie d'une étape (E6) de surmoulage desdits pôles trapézoïdaux (PO1, PO2) par de la résine (RES), apte à donner une forme en arc de cercle à l'extrémité radiale externe (ERE) desdits pôles (PO1, PO2) après surmoulage, lesdits pôles (PO1, PO2) ainsi surmoulés étant aptes à être insérés dans un corps de rotor et à recevoir une frette sur ladite extrémité radiale externe (ERE).

5. Procédé de fabrication selon l'une quelconque des revendications précédentes, **caractérisé en ce que** l'étape (E3) de formation de rangées (RA) d'aimants unitaires (AU) par collage est précédée d'une étape (E2) de sectionnement d'un bloc d'aimant (BLO) apte à fournir lesdits aimants unitaires (AU).

6. Procédé de fabrication selon la revendication précédente, **caractérisé en ce que** ladite étape (E2) de sectionnement d'un bloc d'aimant (BLO) est précédée d'une étape (E1) de rainurage dudit bloc d'aimant (BLO) apte à favoriser ladite étape (E2) de sectionnement dudit bloc d'aimant (BLO).

7. Système de fabrication de pôles d'aimants (PO1, PO2, PO3) mettant en œuvre le procédé selon l'une quelconque des revendications 1 à 6, ledit système comportant :
- un réceptacle (REC) comportant une paroi de fond amovible (PFA) inclinée vers le bas, apte à recevoir des aimants unitaires (AU) provenant d'une surface de déversement (SD), ledit réceptacle (REC) comportant une surface support (SSR) dont l'inclinaison par rapport à ladite paroi de fond (PFA) reproduit un angle (α) entre deux côtés adjacents dudit parallélogramme, ladite paroi de fond (PFA) étant apte à laisser glisser lesdits aimants unitaires (AU) reçus jusqu'à ladite surface support (SSR),
- des moyens (MIC) d'injection de colle placés au-dessus dudit réceptacle (REC) et aptes à envoyer de la colle entre lesdits aimants (AU) au fur et à mesure qu'ils glissent sur ladite paroi de fond (PFA) et forment ladite rangée (RA) d'aimants unitaires (AU),
- des moyens élastiques (MEP) reliant ladite paroi de fond (PFA) amovible et ladite surface support (SSR), apte à laisser descendre ladite paroi de fond (PFA) amovible jusqu'à ce que l'épaisseur de ladite rangée (RA) d'aimants unitaires (AU) ainsi formée passe en retrait de ladite surface de déversement (SD),
- ladite surface de déversement (SD), apte à fournir ledit réceptacle (REC) en aimants unitaires (AU) d'abord sur la paroi de fond amovible (PFA) puis sur ladite rangée (RA) d'aimants unitaires (AU) passée en retrait et sur les rangées (RA) d'aimants unitaires (AU) suivantes ainsi formées par ledit procédé, la colle envoyée par lesdits moyens (MIC) d'injection de colle étant apte à glisser sous une rangée (RA) d'aimants unitaires (AU) en formation et à coller ainsi ladite rangée (RA) d'aimants unitaires (AU) en formation à la rangée (RA) d'aimants unitaires (AU) sous-jacente.

8. Système de fabrication de pôles d'aimants (PO1, PO2, PO3) selon la revendication précédente, **caractérisée en ce que** ladite surface de déversement (SD) est inclinée vers le bas et en qu'il comporte en outre :
- un moyen d'entraînement horizontal (MEZ) en amont de ladite surface de déversement (SD), ledit moyen d'entraînement horizontal (MEZ) étant apte à entraîner un bloc d'aimant (BLO) vers ladite surface de déversement (SD), ledit bloc d'aimant (BLO) ayant la forme d'une plaque longitudinale apte à être coupée transversalement en une série d'aimants unitaires (AU),
- un moyen de blocage (MBL) dudit bloc d'aimant (BLO) sur ledit moyen d'entraînement (MEZ) horizontal lorsque ledit bloc d'aimant (BLO) déborde sur ladite surface de déversement (SD) d'un volume correspondant à un aimant unitaire (AU),
- un moyen de sectionnement (MSEC) dudit bloc d'aimant (BLO) bloqué par ledit moyen de blocage (MBL) en un aimant unitaire (AU) d'une part, et ce qui reste dudit bloc d'aimant (BLO) d'autre part.

9. Système de fabrication de pôles d'aimants (PO1, PO2, PO3) selon la revendication précédente, **caractérisé en ce qu'**il comporte en outre un moyen (MRAI) de rainurage dudit bloc d'aimant (BLO) apte à marquer les emplacements de sectionnement dudit bloc d'aimant (BLO) en aimants unitaires (AU), ledit moyen de rainurage (MRAI) étant placé en amont dudit moyen de blocage (MBL).

10. Système de fabrication de pôles d'aimants (PO1, PO2, PO3) selon l'une quelconque des revendication 7 à 9, **caractérisé en ce qu'**il comporte un moyen de transfert des rangées (RA) d'aimants unitaires (AU) collées entre elles lorsqu'elles forment ladite structure (STRU) d'aimants unitaires (AU), depuis ledit réceptacle (REC) vers un support de coupe, un moyen de maintien de ladite structure (STRU) d'aimants unitaires (AU) transférée par ledit moyen de transfert sur ledit support de coupe, et un moyen de séparation de ladite structure (STRU) d'aimants unitaires (AU) en deux pôles (PO1, PO2, PO3) trapézoïdaux identiques formant chacun un pôle d'aimants (PO1, PO2, PO3).

11. Système de fabrication de pôles d'aimants (PO1, PO2, PO3) selon la revendication précédente, **caractérisé en ce que** ledit moyen de séparation de ladite structure (STRU) d'aimants unitaires en deux pôles (PO1, PO2, PO3) trapézoïdaux identiques utilise un jet d'eau à haute pression.

## Patentansprüche

1. Verfahren zur Herstellung von Magnetpolen (PO1, PO2, PO3) für eine elektrische Axialflussmaschine, wobei die Magnetpole (PO1, PO2, PO3) aus identischen und länglichen Einzelmagneten (AU) gebildet sind, die magnetisch längs ausgerichtet sind, wobei das Verfahren einen Schritt des Bildens (E3) von Reihen (RA) aus Einzelmagneten (AU) durch Miteinanderverkleben der Einzelmagnete (AU) entlang einer ihrer Längsflächen (SLU) mit gleichem Querschnitt umfasst, wobei das Verfahren **dadurch gekennzeichnet ist, dass** es ferner die folgenden Schritte umfasst:
- Aneinanderkleben (E4) der Reihen (RA) aus Einzelmagneten (AU), wobei die Reihen (RA) aus Einzelmagneten geneigt gehalten werden in Bezug auf eine Ebene (PLA), welche die äußersten Längskanten der ersten Einzelmagnete (AU) jeder der Reihen (RA) umfasst, bis eine Struktur (STRU) aus Einzelmagneten (AU) in Form eines, bei Betrachtung eines ebenen Querschnitts der Struktur, nicht rechteckigen Parallelogramms gebildet wird, wobei der Querschnitt orthogonal zu der die Längskanten umfassenden Ebene ist,
- Teilen (E5) der Struktur (STRU) aus Einzelmagneten (AU) in zwei identische trapezförmige Pole (PO1, PO2, PO3).

2. Verfahren zur Herstellung nach Anspruch 1, **dadurch gekennzeichnet, dass** der Schritt (E3) des Bildens von Reihen (RA) aus Einzelmagneten (AU) parallel zu dem Schritt (E4) des Aneinanderklebens der Reihen (RA) aus Einzelmagneten (AU) ausgeführt wird, wobei das Kleben der Einzelmagnete (AU) zum Bilden einer Reihe (RA) auf einer zuvor gebildeten und mit Klebstoff bestrichenen Reihe (RA) aus Einzelmagneten (AU) durchgeführt wird.

3. Verfahren zur Herstellung nach einem der vorhergehenden Ansprüche, **dadurch gekennzeichnet, dass** das Teilen (E5) der Struktur (STRU) aus Einzelmagneten (AU) in zwei identische trapezförmige Pole (PO1, PO2) entlang einer Linie (LS1, LS2) durchgeführt wird, welche die die Längskanten der ersten Einzelmagnete (AU) jeder der Reihen (RA) umfassende Ebene mit der die Längskanten der letzten Einzelmagnete (AU) jeder der Reihen (RA) umfassenden Ebene verbindet.

4. Verfahren zur Herstellung nach einem der vorhergehenden Ansprüche, **dadurch gekennzeichnet, dass** auf den Schritt (E5) des Teilens ein Schritt (E6) des Umspritzens der trapezförmigen Pole (PO1, PO2) mit Harz (RES) folgt, der geeignet ist, dem radial äußeren Ende (ERE) der Pole (PO1, PO2) nach dem Umspritzen eine Kreisbogenform zu verleihen, wobei die so umspritzten Pole (PO1, PO2) geeignet sind, in einen Rotorkörper eingesetzt zu werden und an dem radial äußeren Ende (ERE) eine Bandage aufzunehmen.

5. Verfahren zur Herstellung nach einem der vorhergehenden Ansprüche, **dadurch gekennzeichnet, dass** dem Schritt (E3) des Bildens von Reihen (RA) aus Einzelmagneten (AU) durch Kleben ein Schritt (E2) des Trennens eines Magnetblocks (BLO) vorausgeht, der geeignet ist, die Einzelmagnete (AU) bereitzustellen.

6. Verfahren zur Herstellung nach dem vorhergehenden Anspruch, **dadurch gekennzeichnet, dass** dem Schritt (E2) des Trennens eines Magnetblocks (BLO) ein Schritt (E1) des Rillens des Magnetblocks (BLO) vorausgeht, der geeignet ist, den Schritt (E2) des Trennens des Magnetblocks (BLO) zu begünstigen.

7. System zur Herstellung von Magnetpolen (PO1, PO2, PO3), welches das Verfahren nach einem der Ansprüche 1 bis 6 einsetzt, wobei das System umfasst:
- einen Behälter (REC), der eine nach unten geneigte lösbare Bodenwand (PFA) umfasst und geeignet ist, von einer Ablauffläche (SD) kommende Einzelmagnete (AU) aufzunehmen, wobei der Behälter (REC) eine Stützfläche (SSR) umfasst, deren Neigung in Bezug auf die Bodenwand (PFA) einen Winkel (α) zwischen zwei benachbarten Seiten des Parallelogramms nachbildet, wobei die Bodenwand (PFA) geeignet ist, die aufgenommenen Einzelmagnete (AU) bis zu der Stützfläche (SSR) gleiten zu lassen,
- Klebstoffeinspritzmittel (MIC), die über dem Behälter (REC) angeordnet sind und geeignet sind, Klebstoff nach und nach zwischen die Magnete (AU) zu leiten, während sie auf die Bodenwand (PFA) gleiten und die Reihe (RA) aus Einzelmagneten (AU) bilden,
- elastische Mittel (MEP), welche die lösbare Bodenwand (PFA) und die Stützfläche (SSR) verbinden und geeignet sind, die lösbare Bodenwand (PFA) absinken zu lassen, bis die Dicke der so gebildeten Reihe (RA) aus Einzelmagneten (AU) in Bezug auf die Ablauffläche (SD) zurücktritt,
- die Ablauffläche (SD), die geeignet ist, dem Behälter (REC) Einzelmagnete (AU) zunächst auf der lösbaren Bodenwand (PFA), dann auf der zurückgetretenen Reihe (RA) aus Einzelmagneten (AU) und auf den durch das Verfahren so gebildeten folgenden Reihen (RA) aus Einzelmagneten (AU) bereitzustellen, wobei der von den Klebstoffeinspritzmitteln (MIC) eingeleitete Klebstoff geeignet ist, unter eine in Bildung befindliche Reihe (RA) aus Einzelmagneten (AU) zu gleiten und so die in Bildung befindliche Reihe (RA) aus Einzelmagneten (AU) an die darunterliegende Reihe (RA) aus Einzelmagneten (AU) zu kleben.

8. System zur Herstellung von Magnetpolen (PO1, PO2, PO3) nach dem vorhergehenden Anspruch, **dadurch gekennzeichnet, dass** die Ablauffläche (SD) nach unten geneigt ist und dass sie ferner umfasst:
- ein Horizontalantriebsmittel (MEZ) stromauf der Ablauffläche (SD), wobei das Horizontalantriebsmittel (MEZ) geeignet ist, einen Magnetblock (BLO) zu der Ablauffläche (SD) mitzuführen, wobei der Magnetblock (BLO) die Form einer Längsplatte hat, die geeignet ist, quer in eine Serie von Einzelmagneten (AU) geschnitten zu werden,
- ein Festhaltemittel (MBL) zum Festhalten des Magnetblocks (BLO) auf dem Horizontalantriebsmittel (MEZ), wenn der Magnetblock (BLO) über die Ablauffläche (SD) um ein einem Einzelmagneten (AU) entsprechendes Volumen hinausragt,
- ein Trennmittel (MSEC) zum Trennen des von dem Festhaltemittel (MBL) festgehaltenen Magnetblocks (BLO) in einen Einzelmagneten (AU) zum einen und den Rest des Magnetblocks (BLO) zum anderen.

9. System zur Herstellung von Magnetpolen (PO1, PO2, PO3) nach dem vorhergehenden Anspruch, **dadurch gekennzeichnet, dass** es ferner ein Rillungsmittel (MRAI) zum Rillen des Magnetblocks (BLO) umfasst, das geeignet ist, die Stellen des Trennens des Magnetblocks (BLO) in Einzelmagnete (AU) zu markieren, wobei das Rillungsmittel (MRAI) stromauf des Festhaltemittels (MBL) angeordnet ist.

10. System zur Herstellung von Magnetpolen (PO1, PO2, PO3) nach einem der Ansprüche 7 bis 9, **dadurch gekennzeichnet, dass** es ein Transfermittel für die miteinander verklebten Reihen (RA) aus Einzelmagneten (AU), wenn sie die Struktur (STRU) aus Einzelmagneten (AU) bilden, von dem Behälter (REC) zu einem Schneidträger, ein Mittel zum Halten der von dem Transfermittel auf den Schneidträger transferierten Struktur (STRU) aus Einzelmagneten (AU), und ein Mittel zum Teilen der Struktur (STRU) aus Einzelmagneten (AU) in zwei identische trapezförmige Pole (PO1, PO2, PO3), die jeweils einen Magnetpol (PO1, PO2, PO3) bilden, umfasst.

11. System zur Herstellung von Magnetpolen (PO1, PO2, PO3) nach dem vorhergehenden Anspruch, **dadurch gekennzeichnet, dass** das Mittel zum Teilen der Struktur (STRU) aus Einzelmagneten in zwei identische trapezförmige Pole (PO1, PO2, PO3) einen Hochdruckwasserstrahl verwendet.

## Claims

1. Method for manufacturing magnetic poles (PO1, PO2, PO3) for an axial flux electric machine, said magnetic poles (PO1, PO2, PO3) being formed from identical, oblong unit magnets (AU) oriented magnetically longitudinally, said method comprising a step of forming (E3) rows (RA) of unit magnets (AU) by adhesively bonding said unit magnets (AU) together along one of their longitudinal surfaces (SLU) having the same section, said method being **characterized in that** it further comprises the steps of:
- adhesively bonding (E4) said rows (RA) of unit magnets (AU) to one another, while at the same time keeping said rows (RA) of unit magnets (AU) inclined with respect to a plane (PLA) comprising the outermost longitudinal edges of the first unit magnets (AU) of each of said rows (RA), to form a structure (STRU) of unit magnets (AU) in the form of a non-rectangular parallelogram, considering a planar section of the structure, said section being orthogonal to the plane comprising said longitudinal edges,
- separating (E5) said structure (STRU) of unit magnets (AU) into two identical trapezoidal poles (PO1, PO2, PO3).

2. Manufacturing method according to Claim 1, **characterized in that** said step (E3) of forming rows (RA) of unit magnets (AU) is carried out in parallel with the step (E4) of adhesively bonding the rows (RA) of unit magnets (AU) to one another, said adhesive bonding of said unit magnets (AU) to form a row (RA) being performed on a row (RA) of unit magnets (AU) that has been previously formed and coated with adhesive.

3. Manufacturing method according to either one of the preceding claims, **characterized in that** said separation (E5) of said structure (STRU) of unit magnets (AU) into two identical trapezoidal poles (PO1, PO2) is performed along a line (LS1, LS2) that connects said plane (PLA) comprising the longitudinal edges of the first unit magnets (AU) of each of said rows (RA) to the plane comprising the longitudinal edges of the last unit magnets (AU) of each of said rows (RA).

4. Manufacturing method according to any one of the preceding claims, **characterized in that** said separation step (E5) is followed by a step (E6) of overmoulding said trapezoidal poles (PO1, PO2) with resin (RES), which can give the outer radial end (ERE) of said poles (PO1, PO2) the shape of a circular arc after overmoulding, said poles (PO1, PO2) thus overmoulded being able to be inserted into a rotor body and to receive a band on said outer radial end (ERE).

5. Manufacturing method according to any one of the preceding claims, **characterized in that** the step (E3) of forming rows (RA) of unit magnets (AU) by adhesive bonding is preceded by a step (E2) of severing a magnet block (BLO) that can supply said unit magnets (AU).

6. Manufacturing method according to the preceding claim, **characterized in that** said step (E2) of severing a magnet block (BLO) is preceded by a step (E1) of grooving said magnet block (BLO), which can promote said step (E2) of severing said magnet block (BLO).

7. System for manufacturing magnetic poles (PO1, PO2, PO3) implementing the method according to any one of Claims 1 to 6, said system comprising:
- a receptacle (REC) comprising a downwardly inclined removable bottom wall (PFA), which can receive unit magnets (AU) originating from a discharge surface (SD), said receptacle (REC) comprising a support surface (SSR), the inclination of which with respect to said bottom wall (PFA) reproduces an angle (a) between two adjacent sides of said parallelogram, said bottom wall (PFA) being able to allow said unit magnets (AU) received to slide down to said support surface (SSR),
- adhesive injection means (MIC) placed above said receptacle (REC) and able to feed adhesive between said magnets (AU) as they slide on said bottom wall (PFA) and form said row (RA) of unit magnets (AU),
- elastic means (MEP) connecting said removable bottom wall (PFA) and said support surface (SSR), which can allow said removable bottom wall (PFA) to descend until the thickness of said row (RA) of unit magnets (AU) thus formed moves away from said discharge surface (SD),
- said discharge surface (SD), which can supply said receptacle (REC) with unit magnets (AU), first of all on the removable bottom wall (PFA) and then on said moved-away row (RA) of unit magnets (AU) and on the subsequent rows (RA) of unit magnets (AU) thus formed by said method, the adhesive fed by said adhesive injection means (MIC) being able to slide under a row (RA) of unit magnets (AU) in formation and thus to adhesively bond said row (RA) of unit magnets (AU) in formation to the underlying row (RA) of unit magnets (AU).

8. System for manufacturing magnetic poles (PO1, PO2, PO3) according to the preceding claim, **characterized in that** said discharge surface (SD) is downwardly inclined and **in that** it further comprises:
- a horizontal drive means (MEZ) upstream of said discharge surface (SD), said horizontal drive means (MEZ) being able to drive a magnet block (BLO) towards said discharge surface (SD), said magnet block (BLO) having the shape of a longitudinal plate that can be cut transversely into a series of unit magnets (AU),
- a blocking means (MBL) for blocking said magnet block (BLO) on said horizontal drive means (MEZ) when said magnet block (BLO) projects beyond said discharge surface (SD) by a volume corresponding to a unit magnet (AU),
- a severing means (MSEC) for severing said magnet block (BLO) blocked by said blocking means (MBL) into a unit magnet (AU) on the one hand, and what remains of said magnet block (BLO) on the other hand.

9. System for manufacturing magnetic poles (PO1, PO2, PO3) according to the preceding claim, **characterized in that** it further comprises a means (MRAI) for grooving said magnet block (BLO), which can mark the locations for severing said magnet block (BLO) into unit magnets (AU), said grooving means (MRAI) being placed upstream of said blocking means (MBL).

10. System for manufacturing magnetic poles (PO1, PO2, PO3) according to any one of Claims 7 to 9, **characterized in that** it comprises a means for transferring the rows (RA) of unit magnets (AU) adhesively bonded together when they form said structure (STRU) of unit magnets (AU), from said receptacle (REC) to a cutting support, a means for holding said structure (STRU) of unit magnets (AU) transferred by said transfer means onto said cutting support, and a means for separating said structure (STRU) of unit magnets (AU) into two identical trapezoidal poles (PO1, PO2, PO3) each forming a magnetic pole (PO1, PO2, PO3).

11. System for manufacturing magnetic poles (PO1, PO2, PO3) according to the preceding claim, **characterized in that** said means for separating said structure (STRU) of unit magnets into two identical trapezoidal poles (PO1, PO2, PO3) uses a high-pressure water jet.
